# EUROPÄISCHE PATENTANMELDUNG

(11) **EP 2 545 876 A2**
(43) Veröffentlichungstag der Anmeldung: **16.01.2013**
(21) Anmeldenummer: 12175395.8
(22) Anmeldetag: 06.07.2012
(51) Int. Cl.: A61C 1/00

(54) **Antriebseinheit**

(30) Priorität: 12.07.2011 DE 102011051754
(71) Anmelder: SycoTec GmbH & Co. KG, 88299 Leutkirch im Allgäu (DE)
(72) Erfinder: Dr. Rickert, Martin, 88410 Bad Wurzach (DE); Gruber, Helmut, 87740 Buxheim (DE)
(74) Vertreter: Pfister, Stefan Helmut Ulrich

(57) **Zusammenfassung**

Die Erfindung betrifft eine Antriebseinheit für ein dentaltechnisches Handstück mit einer Kupplung für die lösbare Befestigung des Handstückes und einem Antrieb sowie einer Antriebssteuerung, wobei die Antriebseinheit eine Erkennungseinheit umfasst, die eine gegebenenfalls an dem Handstück vorgesehene Markierung beziehungsweise Markierungsinformation erfassen vermag und aus der Markierung beziehungsweise Markierungsinformation eine Rotationsgeschwindigkeit für den Antrieb ableitet. Die Erfindung umfasst desweiteren ein dentaltechnisches Handstück zur Verwendung mit der Antriebseinheit und ein aus der Antriebseinheit und einem dentaltechnischen Handstück gebildetes dentaltechnisches System sowie ein Verfahren für die Bestimmung der maximalen Rotationsgeschwindigkeit der Antriebseinheit.

## Beschreibung

Die Erfindung betrifft eine Antriebseinheit für ein dentaltechnisches Handstück, wobei die Antriebseinheit eine Kupplung für die lösbare Befestigung des Handstückes aufweist und die Antriebseinheit einen Antrieb, insbesondere einen Elektromotor, sowie eine Antriebssteuerung umfasst.

Die Antriebssteuerung dient dazu, den Antrieb, beispielsweise den Elektromotor zu regeln. Typischer Weise werden die gattungsgemäßen Antriebseinheiten für den Antrieb von dentaltechnischen Handstücken verwendet, wie sie zum Beispiel von einem Zahnarzt, der sie bei der Behandlung von Patienten einsetzt, zum Einsatz kommen.

Der Begriff Handstück umfasst als Oberbegriff daher sowohl Hand- und Winkelstücke, die eine Abwinklung aufweisen oder die sich in gerader Richtung ohne Abwinklung erstrecken, wie auch eine, zum Beispiel pneumatisch angetriebene Turbine oder auch einen Instrumententräger.

Das Handstück wird durch einen Antrieb, bevorzugt einen Elektromotor, angetrieben, es kann aber auch ein mit Luft betriebener Motor als Antrieb vorgesehen sein. Das dentaltechnische Handstück trägt das Bearbeitungswerkzeug, zum Beispiel einen Bohrer, Fräser oder Feilen für die Endodontie. Für die verschiedenen Bearbeitungsschritte verwendet der Zahnarzt unterschiedliche Rotationsgeschwindigkeiten des Bearbeitungswerkzeuges. Im Stand der Technik bekannte Antriebskonzepte besitzen eine maximale Rotationsgeschwindigkeit von bis zu 40.000 Umdrehungen pro Minute. Über die Antriebssteuerung kann der Zahnarzt die Antriebsgeschwindigkeit der Antriebseinheit auswählen und regeln. Die Antriebssteuerung ist zum Beispiel eine elektrische Steuerung für einen Elektroantrieb oder ein regelbares beziehungsweise drosselbares Magnetventil für einen pneumatischen Antrieb. Die Anwendung ist nicht auf die Verwendung eines Elektromotors beschränkt. Entsprechend dem jeweiligen Anwendungsfall ist in dem Handstück ein Über- oder Untersetzungsgetriebe vorgesehen, um die maximale Rotationsgeschwindigkeit des Bearbeitungswerkzeuges auf die maximale Rotationsgeschwindigkeit der Antriebseinheit anzupassen. Es sind bei einem Zahnarzt beispielsweise bis zu fünf unterschiedliche Handstücke im Einsatz, die sich durch die jeweiligen Über- oder Untersetzungsverhältnisse unterscheiden.

Es sind Antriebseinheiten bekannt, die anstelle einer maximalen Rotationsgeschwindigkeit von 40.000 Umdrehungen pro Minute eine maximale Rotationsgeschwindigkeit von bis zu 100.000 Umdrehungen pro Minute erlauben. Allerdings sind einige Handstücke, vor allem alter Bauart, für diesen Drehzahlbereich nicht ausgelegt und können daher mit derart hohen Rotationsgeschwindigkeiten nicht gefahrlos betrieben werden.

Ausgehend von diesem Stand der Technik ist es Aufgabe der vorliegenden Erfindung, den Stand der Technik derart zu verbessern, dass auch Handstücke älterer Bauart oder mit bauartbedingt niedrigerer maximal zulässiger Rotationsgeschwindigkeit an neuartigen Antriebseinheiten sicher und zuverlässig betreibbar sind.

Zur Lösung dieser Aufgabe geht die Erfindung aus von einer Antriebseinheit wie eingangs beschrieben und schlägt vor, dass die Antriebseinheit eine Erkennungseinheit umfasst, die dazu dient, eine gegebenenfalls an dem Handstück vorgesehene Markierung oder Markierungsinformation zu erfassen. Aus der erfassten Markierung beziehungsweise Markierungsinformation wird dann eine Rotationsgeschwindigkeit abgeleitet.

Die erfindungsgemäße Antriebseinheit ist grundsätzlich geeignet, eine Rotationsgeschwindigkeit zur Verfügung zu stellen, die deutlich höher ist, als die bekannten Antriebseinheiten. Im Stand der Technik ist eine maximale Rotationsgeschwindigkeit von circa 40.000 Umdrehungen pro Minute bekannt, die neuartigen Antriebseinheiten realisieren Rotationsgeschwindigkeiten von mehr als 50.000 Umdrehungen, bevorzugt mehr als 70.000, 80.000 oder 90.000 Umdrehungen, insbesondere bis zu 100.000 oder 120.000 Umdrehungen pro Minute. Der Geschwindigkeitsbereich ab 40.000 Umdrehungen pro Minute wird als hochschnell beschrieben.

Durch die Anordnung der erfindungsgemäß vorgeschlagenen Erkennungseinheit wird erreicht, dass die Antriebseinheit erkennt, ob ein auf die Kupplung aufgestecktes Handstück grundsätzlich geeignet ist, mit höheren als den herkömmlichen Rotationsgeschwindigkeiten betrieben zu werden oder nicht. Aufgrund dieser Information wird dann durch die Antriebssteuerung die maximale Rotationsgeschwindigkeit für den Antrieb vorgegeben, die dann im (zahnärztlichen) Betrieb nicht überschritten wird.

Die erfindungsgemäße Antriebseinheit ermöglich somit eine auf das Handstück abgestimmte und damit an die maximal mögliche Rotationsgeschwindigkeit des Handstückes angepasste Steuerung des Antriebs beziehungsweise dessen Umdrehungszahl.

Der Effekt der Erfindung ist, dass der Zahnarzt den Vorzug einer hochschnelldrehenden Antriebseinheit für hochschnelldrehende Handstücke einsetzen, aber auch seine Handstücke älterer Bauart problemlos weiterverwenden kann und keine Beschädigungen oder Zerstörungen der Handstücke beim Betrieb an der hochschnelldrehenden Antriebseinheit befürchten muss. Die "alten" Handstücke dürfen und können nur mit einer begrenzten, geringeren maximalen Rotationsgeschwindigkeit betrieben werden.

Ein wesentlicher Vorzug der Anordnung der Erkennungseinheit liegt insbesondere darin, dass die Erkennung der Markierung durch die Antriebseinheit beziehungsweise Antriebssteuerung automatisch erfolgt, nämlich dann, wenn das Handstück auf die Kupplung aufgesetzt ist beziehungsweise wird. Der Zahnarzt und sein Personal sind bei der Patientenbehandlung erheblich von solchen Kontrolltätigkeiten entlastet. Durch den Einsatz der hochschnellen Antriebseinheiten ist es mittelfristig für den Zahnarzt auch möglich, den Großteil seiner Handstücke einzusparen. Durch eine mehr als Verdoppelung der maximalen Rotationsgeschwindigkeit entfällt die Notwendigkeit zur Anordnung von Übersetzungsgetrieben in den Handstücken, da hohe Geschwindigkeiten bereits durch die neuen Antriebseinheiten zur Verfügung gestellt werden.

Die erfindungsgemäß vorgeschlagene Verbesserung stellt auch einen Investitionsschutz für den Zahnarzt dar, da er noch vorhandende alte Handstücke aufbrauchen und zukünftig dann auf einen kleineren Satz von Handstücken umstellen kann. Es wird dann zum Beispiel auch bei der Bearbeitung der zeitaufwendige Wechsel und die Umrüstung der Handstücke eingespart.

Eine vorteilhafte Weiterbildung der erfindungsgemäßen Antriebseinheit sieht vor, dass von der Erkennungseinheit die der Markierung zugeordnete oder zuordenbare Markierungsinformation erkennbar ist und diese in ein Steuersignal umgesetzt wird. Das Steuersignal wird von der Erkennungseinheit an die Antriebssteuerung weitergegeben. Diese gibt anhand des weitergegebenen Steuersignales die maximale Rotationsgeschwindigkeit des Antriebes vor oder stellt diese ein. Es ist hierbei vorgesehen, dass die Information, die die Markierung darstellt beziehungsweise codiert, unmittelbar von der Erkennungseinheit aus der Markierung erfasst beziehungsweise abgeleitet wird, das heißt, die Markierung bereits derart ausgebildet ist, dass die Informationen, beispielsweise ein Barcode oder die Information eines RFID-Chips direkt von der Erkennungseinheit ohne weitere Abfrage oder sonstige Vorgänge entnommen beziehungsweise erfasst werden kann. Neben dieser Art und Weise der Informationserkennung und Weitergabe besteht selbstverständlich die Möglichkeit, dass die Markierung nur auf eine entsprechende Information, beispielsweise in einem Speicher oder einer Datenbank hinweist. Die Erkennungseinheit kann dann aufgrund der Markierungsinformation auf die gespeicherten Informationen zugreifen und diese dann in ein Steuersignal umsetzen, das beispielsweise das Handstück und/oder die dafür geeignete maximale Rotationsgeschwindigkeit codiert und die Antriebssteuerung entsprechend einstellt.

Hierbei ist insbesondere zu beachten, dass die erfindungsgemäßen Antriebseinheiten auch mit Handstücken verbindbar sind, die keine Markierung aufweisen. Auch das Fehlen dieser Markierung am Handstück dient als Markierungsinformation die in geeigneter Weise auf die Antriebssteuerung der Antriebseinheit einzuwirken vermag.

Je nach Ausführungsform des Systems wird bei Fehlen einer Markierung entweder davon ausgegangen, dass sich das Handstück für hohe Geschwindigkeiten eignet oder aber, dass das Handstück nicht für höhere Geschwindigkeiten geeignet ist. Während im ersten Fall sofort die hohe maximale Rotationsgeschwindigkeit eingestellt wird, wird im zweiten Fall zunächst mit niedriger Drehzahl gearbeitet und erst auf Anforderung beziehungsweise Bedienereingabe hin die Rotationsgeschwindigkeit erhöht.

In einer als vorteilhaft angesehenen Ausführungsform wird vorgeschlagen, dass die Erkennungseinheit einen Sensor aufweist, der im Bereich der Kupplung und insbesondere im Gehäuse der Antriebseinheit angeordnet ist. Anstelle eines Sensors besteht hier auch die Möglichkeit, dass im Gehäuse der Antriebseinheit eine Ausleseeinheit beispielsweise im Bereich der Kupplung angeordnet ist, die entsprechende Markierungen oder Markierungsinformationen auszulesen vermag.

Wird in der Erkennungseinheit ein Sensor verwendet, so erweist es sich als vorteilhaft, wenn hier ein kapazitiver, induktiver, optischer oder elektrisch wirkender Sensor vorgesehen ist. Der Sensor ist dabei insbesondere in der Antriebseinheit angeordnet und erfasst eine auf das Sensorprinzip abgestimmte Identifikationsmarkierung an dem mit der Antriebseinheit zu betreibenden Handstück. Die Markierung kann, beispielsweise als kapazitive Oberfläche ausgebildet werden, die mit entsprechenden Sensoren in der Antriebseinheit zusammenwirkt und klar die maximal mögliche Drehzahl des Handstückes definiert. Des Weiteren besteht hier selbstverständlich auch die Möglichkeit, dass weitere Informationen über das Handstück in der Markierung hinterlegt und diese dann durch den Sensor erfasst und letztendlich an die Antriebssteuerung weitergegeben werden. Bei der Verwendung induktiver Sensorik erlaubt die Anordnung einer Spule und die Ausbildung eines Magnetfeldes die Erfassung eines Handstückes sowie bei geeigneter Anordnung der Sensorelemente eine klare Zuordnung des jeweiligen Handstückes beziehungsweise der Handstückparameter und daraus ableitbar eine Ansteuerung für die Antriebseinheit. Als elektrisch wirkendes Sensorprinzip wird zum Beispiel ein definierter Spannungsabfall an einem Widerstand angesehen.

In einer als vorteilhaft angesehenen Ausführungsform der Antriebseinheit ist vorgesehen, dass die Erkennungseinheit eine Ausleseeinheit für das Auslesen eines die Markierung bildenden beziehungsweise die Markierungsinformation beinhaltenden RFID-Chips aufweist. Die verwendeten RFID-Transponder oder RFID-Tags können aktiv oder passiv ausgebildet werden. Die Information über die maximal mögliche Drehzahl, mit der das entsprechende Handstück betrieben werden kann, kann dabei unveränderbar im RFID-Chip abgelegt werden, so dass hier keinerlei weitere Manipulationen möglich sind. Gleichzeitig besteht die Möglichkeit, dass der RFID-Chip einen beschreibbaren beziehungsweise veränderbaren Speicherbereich aufweist. Es können somit auf dem RFID-Chip weitere Informationen über das Handstück, beispielsweise dessen Hygiene- beziehungsweise Sterilisationszustand, die Nutzungsdauer usw. abgelegt werden. Diese können im Zuge des Auslesens ebenfalls erfasst und weiter verarbeitet werden. Ergibt zum Beispiel das Auslesen des RFID-Chips, dass das Handstück bereits im Einsatz war und zwischenzeitlich nicht sterilisiert wurde, so kann eine Sperrung des Handstückes automatisch durchgeführt werden (zum Beispiel wird der Antrieb abgeschaltet), bis die Information eingegeben wird, wonach das Handstück hygienisch einwandfrei und für die Verwendung freigegeben ist. In diesem Zusammenhang geeignet erscheint die Verwendung von RFID-Transpondern mit einem einmal beschreibbaren und oft lesbaren Speicher, insbesondere für die Informationen zur maximal möglichen Drehzahl sowie einem weiteren Speicherbereich oder Speicherabschnitt, der mehrfach beschreibbar ist und in dem die entsprechenden Informationen veränderbar abgelegt werden können. Es kann somit eine Kombination eines Gerätetracings mit einer Geräteidentifikation erfolgen, die die Organisation, den Einsatz und die Einstellung der Betriebsparameter der jeweiligen Handstücke wesentlich vereinfacht.

Die Ausgestaltung der Erkennungseinheit als ein Sensor ist insbesondere dann von Vorteil, wenn nur zu klären ist, ob das Handstück einer gewissen Gruppe von Handstücken zuzuordnen ist, also zum Beispiel das Handstück hochschnelldrehend oder eher langsam drehend ist. Das Handstück trägt ein entsprechendes Mittel, welches durch den kapazitiven, induktiven optisch oder elektrisch wirkenden Sensor ausgewertet wird.

Durch den Einsatz eines Transponders beziehungsweise RFID-Chips im Handstück und der darauf abgestimmten Erkennungseinheit, die eine Ausleseeinheit für das Auslesen dieser Elemente aufweist, ist natürlich auch nur eine Gruppenzugehörigkeit des Handstückes hinterlegbar oder aber auch, was vorzugsweise der Fall sein wird, eine individualisierende Markierung eines Handstückes von einem anderen Handstück möglich.

Eine Weiterbildung der erfindungsgemäßen Antriebseinheit sieht vor, dass die Erkennungseinheit aus der Markierungsinformation unmittelbar ein Steuersignal generiert. Daneben kann selbstverständlich auch eine unmittelbare Generierung des Steuersignales erfolgen. Dabei liest die Erkennungseinheit die Markierungsinformation aus der Markierung aus und fragt aus einer Datenbank oder einem Speicher die der Markierungsinformation zugeordneten Daten über das jeweilige Handstück ab. Aus diesen Daten wird dann ein Steuersignal generiert, dass an die Antriebssteuerung weitergegeben wird. Diese Vorgehensweise hat den Vorteil, dass zunächst keine unmittelbaren Informationen über das jeweilige Handstück an der Markierung eingegeben werden müssen. Es können somit Standardmarkierungsverfahren- und arten verwendet werden. Dem System zugeordnet wird eine Datenbank beziehungsweise ein Speicher, der frei konfigurierbar ist. Die Datenverwaltung beziehungsweise Speicherorganisation kann dann geräteunabhängig erfolgen. So können beispielsweise vom Nutzer selbständig weitere Informationen zu dem Handstück eingetragen werden, die dann für den Betrieb beziehungsweise die Ansteuerung der Antriebseinheit zur Verfügung stehen. Die Markierung hat hierbei lediglich die Funktion, das Handstück zu identifizieren. Sämtliche weiteren, für den Betrieb des Handstücks notwendigen Informationen werden dann aus der Datenbank bezogen und unmittelbar oder mittelbar in ein Steuersignal für den Antrieb beziehungsweise die Antriebseinheit umgesetzt.

Gleichwohl umfasst die Erfindung ein dentaltechnisches Handstück, welches mit einem Kupplungsabschnitt ausgestattet ist, der lösbar mit einer Kupplung einer Antriebseinheit, insbesondere zur Übertragung von Energie (zum Beispiel Rotationsenergie oder Strom), einem Medium (zum Beispiel Luft, Wasser oder Informationen) und/oder Drehmoment verbindbar ist. Das Handstück weist einen Antriebsstrang auf, der für den Antrieb eines mit dem Handstück lösbar verbindbaren Bearbeitungswerkzeuges dient. Vorteilhafter Weise trägt ein solches Handstück eine von einer Erkennungseinheit erkennbare Markierung, die auf die maximale Rotationsgeschwindigkeit des Antriebsstranges hinweist. Daneben besteht auch die Möglichkeit, dass die Erkennungseinheit geeignet ist, die Markierungsinformation zu erfassen, auszulesen und/oder auszuwerten und diese über die Markierungsinformation codierte Information an eine Antriebssteuerung, beispielsweise in Form eines Steuersignales weiterzuleiten. Vorteilhafter Weise weist die Erkennungseinheit hierzu zusätzlich eine Auswerte- beziehungsweise Ausleseeinheit auf, die diese Funktionalität zur Verfügung stellt.

Das Handstück weist bevorzugt eine kapazitive, induktive, optische oder elektrisch wirkende Markierung auf, die mit einem entsprechend ausgebildeten Sensor in einer Antriebseinheit zusammenwirkt beziehungsweise von dieser erfasst, ausgelesen und/oder ausgewertet werden kann. Hierbei wird es als besonders günstig angesehen, wenn die Markierung als aktive oder passive Markierung ausgebildet ist. In Frage kommt hier beispielsweise die Verwendung eines Transponders beziehungsweise RFID-Chips als Markierung. Die Erkennungseinheit ist in diesem Fall als Lesegerät für den Transponder beziehungsweise RFID-Chip ausgebildet und kann die im Chip abgelegten Informationen aus diesem auslesen und entsprechend weiter verarbeiten beziehungsweise als Steuersignal für die Antriebssteuerung umgesetzt zur Verfügung stellen.

Es besteht in diesem Zusammenhang die Möglichkeit, dass die Markierung mittelbar oder unmittelbar die maximale Rotationsgeschwindigkeit als Information beinhaltet. Unmittelbar bedeutet in diesem Zusammenhang, dass die Information direkt ausgelesen und die Information hierüber ohne Zwischenschaltung von Auswerteeinheiten oder Informationsspeichern beziehungsweise Datenbanken an die Antriebssteuerung weitergegeben wird. Durch die Markierung kann jedoch auch mittelbar die Information über die Rotationsgeschwindigkeit angegeben werden, in dem die Markierung derart ausgebildet ist, dass diese lediglich auf den Speicherort für die Information über die maximale Rotationsgeschwindigkeit hinweist und die Erkennungseinheit aus einer Datenbank oder einem Speicher die entsprechende Information abfragt und aus dieser dann das Steuersignal generiert. Eine Datenbank beziehungsweise ein Speichereinheit kann beispielsweise Teil des Praxisverwaltungs- und Betriebssystems sein. Daneben sind aber auch plattformunabhängige Stand-alone-Lösungen denkbar.

Als alternative Variante ist es günstiger Weise vorgesehen, dass die Markierung eine das Handstück individualisierende Information trägt oder codiert. Über diese Markierung beziehungsweise individualisierende Information kann dann aus einem Speicher oder einer Datenbank die maximale Rotationsgeschwindigkeit und/oder zusätzliche Informationen für den Betrieb des Handstückes abgerufen beziehungsweise abgeleitet werden, um anhand dieser Informationen dann die Antriebseinheit zu steuern, beziehungsweise um ein Steuersignal für den Antrieb zu generieren.

Des Weiteren umfasst die Erfindung ein dentaltechnisches System, welches zumindest aus einer Antriebseinheit wie beschrieben besteht und wahlweise entweder mit einem Handstück ohne Markierung, wie es im Stand der Technik bekannt ist, oder einem dentaltechnischen Handstück, welches eine Markierung aufweist, verbindbar und daher ausstattbar ist. Die Erkennungseinheit erkennt dabei die gegebenenfalls vorhandene Markierung des auf der Kupplung aufgesteckten Handstückes und leitet die Markierungsinformation vor allem über die maximale Rotationsgeschwindigkeit des Handstückes an eine Antriebssteuerung weiter. Wesentlicher Vorzug dieses erfindungsgemäßen Systems ist insbesondere, dass die Antriebseinheit wahlweise sowohl für alte beziehungsweise nur mit reduzierter maximaler Drehzahl betreibbare Handstücke wie auch für schnellerdrehbare Handstücke verwendbar ist und das System aufgrund der Anordnungen der Erkennungseinheit an der Antriebseinheit automatisch die maximale Rotationsgeschwindigkeit der Antriebseinheit begrenzt beziehungsweise einstellt. Ein wesentlicher Vorzug dieses erfindungsgemäßen dentaltechnischen Systems liegt gerade darin, dass die schnelldrehende, erfindungsgemäße Antriebseinheit mit beiden "Typen" von Handstücken verbindbar und sicher betreibbar ist.

Eine als günstig angesehene Variante des Systems sieht vor, dass in der zugeordneten Antriebssteuerung Informationen über eine hohe und eine niedrige maximale Rotationsgeschwindigkeit hinterlegt sind. Wird das System gestartet, wird durch die Antriebssteuerung zunächst die niedrige maximale Rotationsgeschwindigkeit eingestellt. Aufgrund der an die Antriebssteuerung von der Erkennungseinheit übermittelten Markierungsinformation beziehungsweise einem hieraus generierten Steuersignal wird von der Antriebssteuerung dann auf die hohe maximale Rotationsgeschwindigkeit umgeschaltet, sofern ein hierfür geeignetes Handstück verwendet wird.

In einer alternativen Variante ist vorgesehen, dass durch die Antriebssteuerung zunächst die hohe maximale Rotationsgeschwindigkeit eingestellt ist und die Antriebssteuerung aufgrund der von der Erkennungseinheit übermittelten Markierungsinformation beziehungsweise dem hieraus generierten Steuersignal auf die niedrige maximale Rotationsgeschwindigkeit umschaltet, so dass diese dann am Handgerät anliegt. Während die erstgenannte Variante davon ausgeht, dass nur in Ausnahmefällen ein mit hoher Drehzahl betreibbares Handstück an der Antriebseinheit verwendet wird, geht die Antriebseinheit beziehungsweise Antriebssteuerung der zweiten genannten Variante davon aus, dass ältere, nicht auf hohe Drehzahlen ausgelegte Handstücke nur in seltenen Fällen verwendet werden und stellt daher zunächst die hohe maximale Rotationsgeschwindigkeit ein, die dann nur bedarfsweise auf die niedrige maximale Rotationsgeschwindigkeit umgeschaltet wird.

Des Weiteren umfasst die Erfindung auch ein Verfahren für die Bestimmung der maximalen Rotationsgeschwindigkeit einer Antriebseinheit eines dentaltechnischen Handstückes, wobei die maximale Rotationsgeschwindigkeit von dem Typ des auf die Kupplung der Antriebseinheit aufgesteckten Handstückes vorgegeben wird.

Vorteilhafter Weise ist das Handstück aus einer Mehrzahl von Handstücken ausgewählt. Zumindest eines dieser Handstücke trägt dabei eine Markierung, die automatisch erkannt wird. Aufgrund der durch die Markierung zur Verfügung gestellten Information beziehungsweise der durch diese codierten Information wird dann automatisch auf die maximale Rotationsgeschwindigkeit, mit der das Handstück betrieben werden kann, geschlossen und diese entsprechend in der Antriebseinheit eingestellt. Durch das Verfahren wird somit eine Sicherung zur Verfügung gestellt, die verhindert, dass (ältere) lediglich auf niedrigere maximale Rotationsgeschwindigkeiten ausgelegte Typen von Handstücken an (neueren) eine hohe Antriebsgeschwindigkeit zur Verfügung stellenden Antriebseinheiten betrieben werden können, ohne dass es hier zu Beschädigungen der Handstücke kommt. In der Regel wird davon ausgegangen, dass mit neuartigen Antriebseinheiten auch neuartige, auf diese ausgelegte Handstücke betrieben werden und der Betrieb von älteren Handstücken nur in Ausnahmefällen geschieht. Hierfür wird dann die Markierung beziehungsweise Markierungsinformation verwendet, um eine Drosselung der Antriebseinheit zu erreichen. Gleichwohl besteht selbstverständlich auch die Möglichkeit, dass alle Handstücke, neue wie alte, Markierungen tragen und über die Markierungen auch weitere Informationen über das Handstück zur Verfügung gestellt werden.

Eine vorteilhafte Weiterbildung des Verfahrens sieht vor, dass zunächst ein Handstück auf eine Kupplung einer Antriebseinheit aufgesetzt wird und danach eine Erkennungseinheit der Antriebseinheit eine gegebenenfalls am Handstück angeordnete Markierung erkennt und die Markierungsinformation an die Antriebssteuerung der Antriebseinheit weiterleitet. Aufgrund der weitergegebenen Markierungsinformation beziehungsweise einem hieraus generierten oder abgeleiteten beziehungsweise aus einer Datenbank abgefragten Steuersignal wird die Antriebssteuerung dann die maximal mögliche Rotationsgeschwindigkeit vorgeben. Es wird somit ein sicherer Betrieb des jeweiligen Handstückes an der Antriebseinheit möglich. Die Steuerung beziehungsweise Verwendung der Antriebseinheit beziehungsweise des gesamten dentaltechnischen Systems wird somit wesentlich vereinfacht, da eine Einstellung der maximalen Drehzahl automatisch erfolgt und keinen weiteren Eingriff des Bedieners verlangt. Auch wird durch das Verfahren ermöglicht, mehrere verschiedene Handstücke an ein und derselben Antriebseinheit zu verwenden und eine automatische Anpassung der Antriebseinheit durchzuführen.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

In der Zeichung ist die Erfindung insbesondere in einem Ausführungsbeispiel schematisch dargestellt. Es zeigen:
- Fig. 1: das erfindungsgemäße dentaltechnische System in schematisierter Darstellung
- Fig. 2: eine mögliche Schnittstelle zwischen dentaltechnischem Handgerät und Antriebseinheit in schematisierter Darstellung nach der Erfindung und
- Fig. 3: eine schematisierte Darstellung des Ablaufes des Verfahrens für die Bestimmung der maximalen Rotationsgeschwindigkeit einer Antriebseinheit eines dentaltechnischen Handstückes gemäß der Erfindung

In den Figuren sind gleiche oder einander entsprechende Elemente jeweils mit den gleichen Bezugszeichen bezeichnet und werden daher, sofern nicht zweckmäßig, nicht erneut beschrieben.

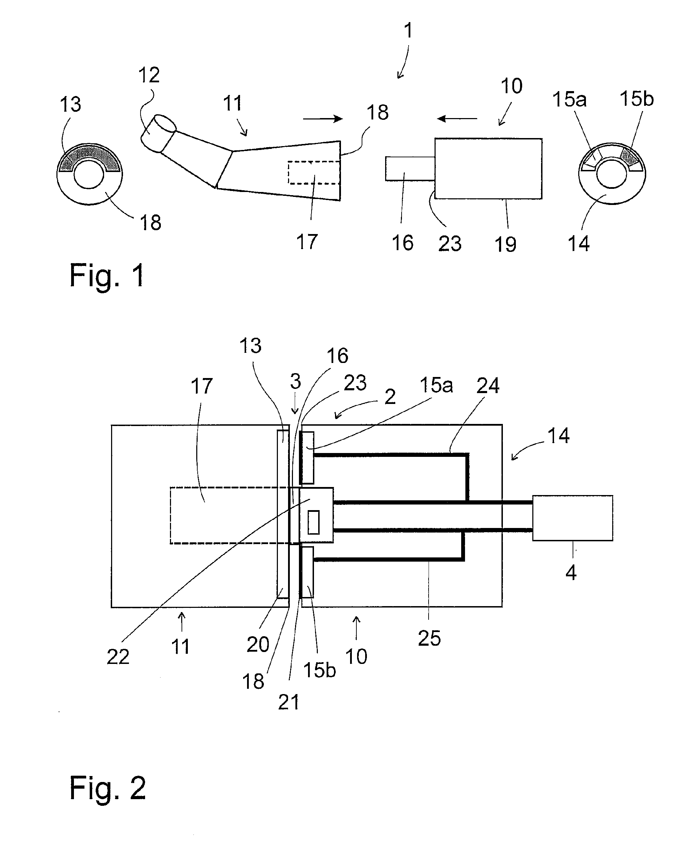

Fig. 1 zeigt ein dentaltechnisches System 1. Dieses umfasst eine Antriebseinheit 10 sowie ein an die Antriebseinheit 10 ankoppelbares Handstück 11. Beim Betrieb derartiger Systeme wird in der Regel eine Antriebseinheit 10 verwendet, an die verschiedene dentaltechnische Handstücke 11 angekoppelt werden können. Das dentaltechnische Handstück 11 umfasst dabei beispielsweise Hand- und Winkelstücke, das heißt, Handstücke 11, die eine Abwinkelung aufweisen. Im Handstück 11 ist ein Antriebsstrang (nicht gezeigt) vorgesehen, der die von der Antriebseinheit 10 eingebrachte Antriebskraft beziehungsweise Drehmoment an ein am Handstück 11 beziehungsweise Handstückkopf 12 angeordnetes Bearbeitungswerkzeug (nicht gezeigt) weitergibt. Entscheidend ist, dass dieser Antriebsstrang und damit das Handstück 11 für höhere Drehzahlen geeignet ist. Die Antriebseinheit 10 weist in der Regel einen Antrieb (in Fig. 1 nicht dargestellt) auf. Dieser ist bevorzugt als Elektromotor ausgebildet. Neben der Verwendung eines Elektromotors besteht selbstverständlich auch die Möglichkeit, dass eine durch Luft betriebene Turbine als Antrieb verwendet wird. Das dentaltechnische Handstück verfügt über einen Bearbeitungskopf 12, in den ein Bearbeitungswerkzeug, beispielsweise ein Bohrer, ein Fräser oder ein Polieraufsatz eingesetzt werden kann. Für die verschiedenen Bearbeitungsschritte beziehungsweise für die mit den jeweiligen Bearbeitungswerkzeugen durchführbaren Bearbeitungen verwendet der Zahnarzt in der Regel unterschiedliche Rotationsgschwindigkeiten des Bearbeitungswerkzeuges. Bekannt sind Antriebskonzepte mit unterschiedlichen maximalen Rotationsgeschwindigkeiten. Herkömmlicher Weise liegen die realisierbaren Rotationsgeschwindigkeiten bei ca. 40.000 Umdrehungen pro Minute. Über eine dem dentaltechnischen System 1 zugeordnete Antriebssteuerung 4 kann die Antriebsgeschwindigkeit der Antriebseinheit 10 ausgewählt beziehungsweise geregelt werden. Neuere Antriebseinheiten 10 realisieren maximale Rotationsgeschwindigkeiten von bis zu 100.000 Umdrehungen pro Minute und/- oder mehr. Problematisch hierbei ist, dass die auf maximale Rotationsgeschwindigkeiten von 40.000 Umdrehungen pro Minute ausgelegten Handstücke 11 in der Regel mit diesen hoch drehenden Antriebseinheiten 10 nicht verwendet werden können, da eine Zerstörung des Handstückes 11 zu befürchten ist. In Fig. 1 dargestellt ist eine Antriebseinheit 10, die für maximale Rotationsgeschwindigkeiten von bis zu 100.000 Umdrehungen pro Minute ausgelegt ist. Das in Fig. 1 gezeigte Handstück 11 kann jedoch gefahrlos nur bei Rotationsgeschwindigkeiten von maximal 40.000 Umdrehungen pro Minute betrieben werden. Um die Kompatibilität zwischen Antriebseinheit 10 und Handstück 11 herzustellen, und um die schwächer ausgelegten Handstücke 11 mit den neuartigen hoch drehenden Antriebseinheiten 10 zu betreiben, weist das Handstück 11 eine Markierung 13 auf, anhand derer die maximal mögliche Drehzahl erkannt und eingestellt werden kann. Demgegenüber ist an der Antriebseinheit 10 eine Erkennungseinheit 14 vorgesehen, die im Ausführungsbeispiel der Fig. 1 Sensoren 15a, 15b aufweist, die die Markierung 13 am Handstück 11 erfassen und hieraus eine Information ableiten, die der Antriebssteuerung 4 zur Verfügung gestellt wird. Ausgehend von der jeweiligen Markierungsinformation beziehungsweise der unmittelbar auslesbaren Markierung 13 wird dann eine Anpassung der (maximalen) Rotationsgeschwindigkeit der Antriebseinheit 10 durchgeführt.

Die Antriebseinheit 10 verfügt zusätzlich über eine Kupplung 16, die mit einem Kupplungsabschnitt 17 im Handstück 11 in Eingriff gebracht wird und eine lösbare Verbindung von Handstück 11 und Antriebseinheit 10 zur Übertragung von Energie, einem Medium, wie zum Beispiel Luft, Wasser oder Licht, von Informationen und/oder Drehmoment gewährleistet. Die Verbindung zwischen Handstück 11 und Antriebseinheit 10 wird beispielsweise durch Aufstecken in Pfeilrichtung erreicht. Selbstverständlich besteht auch die Möglichkeit zur Verwendung eines Schraub- oder Bajonettverschlusses. Im Handstück 11 selbst ist ein Antriebsstrang vorgesehen, über den ein mit dem Handstück 11 lösbar verbundenes Bearbeitungswerkzeug (nicht dargestellt) angetrieben werden kann. In der Markierung 13, die beispielsweise in der der Antriebseinheit 10 zugewandten Begrenzungsfläche 18 vorgesehen sein kann, werden die Informationen über die maximal mögliche Rotationsgeschwindigkeit gespeichert beziehungsweise kodiert. Die Markierung 13 kann selbstverständlich auch als in das Handstück 11 eingelassene kapazitive, induktive oder elektronische oder elektrisch resistive Markierung vorgesehen werden, die von einer entsprechenden Erkennungseinheit 14 beziehungsweise einer in Fig. 1 nicht dargestellten Ausleseeinheit erfasst, ausgelesen und ausgewertet wird. Die Ausleseeinheit kann beispielsweise im Gehäuse 19 der Antriebseinheit 10 angeordnet werden, um direkt dort mit der Markierung 13 zu interagieren. Alternativ besteht auch die Möglichkeit, dass die Ausleseeinheit von dem Gehäuse 19 getrennt vorgesehen ist und lediglich eine Übertragung der in der Markierung 13 enthalteten Information durch die Erkennungseinheit 14 durchgeführt wird und der eigentliche Auswerte- und Umsetzungsvorgang dann in der externen Auslese- beziehungsweise einer diesen zugeordneten Auswerteeinheit erfolgt. Alternativ besteht auch die Möglichkeit, dass eine mittelbare Auswertung der Markierung und die darauf folgende Generierung eines Steuersignals durchgeführt wird. Hierzu kodiert die Markierung 13 lediglich eine allgemeine Information beispielsweise über den Speicherort der dem Handstück 11 zugeordneten Identifikationsinformation. Die Erkennungseinheit 14 erfasst die Markierung 13 und in der Auslese-, beziehungsweise Auswerteeinheit erfolgt dann eine Abfrage der zugehörigen Information aus einem Speicher oder einer Datenbank (nicht dargestellt). Anhand dieser Information wird dann ein Steuersignal generiert, das dazu verwendet wird, in der Antriebseinheit 10 die maximal mögliche beziehungsweise für das jeweilige Handstück 11 sinnvolle Rotationsgeschwindigkeit einzustellen.

Die Markierung 13 kann auch als Transponder oder RFID-Chip ausgebildet sein und neben der Information über eine maximal anwendbare Rotationsgeschwindigkeit weitere Informationen über das Handstück tragen. Denkbar ist auch, dass der RFID-Chip beziehungsweise Transponder einen unveränderbaren, das heißt nur auslesbaren Speicherbereich, auf den der Nutzer keinen Zugriff und keine Manipulationsmöglichkeit hat und zusätzlich hierzu einen frei programmierbaren beziehungsweise definierbaren Speicherbereich aufweist, in dem weitere Informationen über das Handstück 11, beispielsweise über dessen Hygiene- oder Sterilisationszustand, die Einsatzdauer, die insgesamte Betriebsdauer usw. abgelegt werden können. Dieser beschreibbare Speicherabschnitt kann mehrfach beschrieben und ausgelesen werden und erlaubt neben einer Identifikation des Handstückes 11 bezüglich der maximal möglichen Rotationsgeschwindigkeit auch eine Individualisierung und eindeutige Identifikation des jeweiligen Handstückes 11 bezüglich weiterer Betriebsparameter. Das RFID-System kann dabei einen aktiven oder passiven RFID-Chip beziehungsweise Transponder aufweisen.

Im Ausführungsbeispiel der Fig. 1 weist das dentaltechnische System 1 eine Erkennungseinheit 14 mit zwei Sensoren 15a, 15b auf. Diese können beispielsweise als kapazitive Sensoren 15a, 15b ausgebildet sein. Demgegenüber ist die Markierung 13 als kapazitive Oberfläche 20 ausgebildet. Aus einer Abfrage beziehungsweise Erfassung der aus der Verbindung von Sensoren 15a,15b und Markierung 13 resultierenden Kapazität wird ein Steuersignal für die Rotationsgeschwindigkeit der Antriebseinheit 10 abgeleitet. Hierbei sind zwei mögliche Varianten vorgesehen. Zum einen besteht die Möglichkeit, dass das Handstück 11, wenn dieses für Rotationsgeschwindigkeiten von beispielsweise 100.000 Umdrehungen pro Minute geeignet ist, keine entsprechende kapazitive Oberfläche 20 aufweist. Die Sensoren 15a, 15b, die in der dem Handstück 11 zugewandten Kontaktfläche 23 der Antriebseinheit 10 angeordnet oder integriert sind, detektieren daher keine elektrische Kapazität und es wird daraus darauf geschlossen, dass sich ein mit höchstmöglicher Rotationsgeschwindigkeit betreibbares Handstück 11 an der Antriebseinheit 10 befindet. Detektieren die Sensoren 15a,15b demgegenüber eine elektrische Kapazität, so wird dies als Signal dafür gewertet, dass ein nur mit niedriger maximaler Rotationsgeschwindigkeit betreibbares Handstück 11 an der Antriebseinheit 10 angeordnet ist. Hieraus wird nun ein Signal generiert, das die Antriebssteuerung 4 anweist, die Antriebseinheit 10 mit der niedrigeren maximalen Rotationsgeschwindigkeit zu betreiben.

Alternativ hierzu besteht selbstverständlich die Möglichkeit, dass grundsätzlich ein Signal beziehungsweise eine Markierung 13 erfasst wird und hier die auf das jeweilige Handstück 11 abgestimmte (maximale) Rotationsgeschwindigkeit eingestellt wird.

In Fig. 2 wird schematisch eine in dem dentaltechnischen System 1 realisierbare Schnittstelle 2 dargestellt. Gezeigt wird hier der Bereich des dentaltechnischen Systems 1, der unmittelbar der Kupplungsstelle 3 zwischen Handstück 11 und Antriebseinheit 10 angeordnet ist. Die Schnittstelle 2 umfasst auf Seiten des Handstückes 11 eine kapazitive Oberfläche 20, die sich ring- oder halbringförmig um den im Handstück 11 vorgesehenen Kupplungsabschnitt 17 erstreckt. Der kapazitiven Oberfläche 20 gegenüberliegend sind an der Antriebseinheit 10 die Sensoren 15a, 15b in einer Kontaktfläche 23 angeordnet. Diese sind beiderseits der an der Antriebseinheit 10 vorgesehenen Kupplung 16 angeordnet. Die Kupplung 16 wird mit dem Kupplungsabschnitt 17 im Handstück 11 in Eingriff gebracht und vermittelt die Übertragung von Medien beziehungsweise Energie zwischen Antriebseinheit 10 und Handstück 11. Die Sensoren 15a,15b weisen zusätzlich eine Oberflächenversiegelung 21 auf, die leicht zu reinigen und zu desinfizieren ist. Anstelle eines kapazitiven Sensorsystems an der Schnittstelle 2 besteht selbstverständlich auch die Möglichkeit, dass hier ein induktives oder RFID-Kodierungssystem beziehungsweise Sensorsystem verwendet wird. In jedem Fall dient das Sensorsystem dazu, zu detektieren, welche Art von Handstück 11 an der Antriebseinheit 10 angeordnet ist, um daraufhin die Motorsteuerung beziehungsweise die Antriebseinheit 10 entsprechend einzustellen. Die Funktionsweise der hier dargestellten Schnittstelle 2 stellt sich wie folgt dar. Die Antriebseinheit 10 weist im Ausführungsbeispiel zusätzliche eine LED 22 auf. Die beiden kapazitiven Sensoren 15a,15b sind an der dem Handstück 11 zugewandten Kontaktfläche 23 zwischen Handstück 11 und Antriebseinheit 10 angeordnet. Die Anordnung der Sensoren 15a,15b entspricht dabei der in Fig. 1 rechts neben dem dentaltechnischen System 1 dargestellten Konfiguration. Die beiden Sensoren 15a, 15b haben einen Kontakt zu der Anode 24 beziehungsweise der Kathode 25 der LED 22 und damit zu deren Stromversorgung. Anode 24 und Kathode 25 sind direkt mit der Motor- beziehungsweise Antriebssteuerung 4 des dentaltechnischen Systems 1 verbunden. Die Antriebssteuerung 4 überwacht die LED-Anschlüsse. Dabei wird auf die Anschlussleitungen eine Wechselspannung aufmoduliert und ein Schwingkreis realisiert. Sensiert nun der kapazitive Sensor eine entsprechende Markierung, verändert sich die Schwingfrequenz des Schwingkreises, was durch die Antriebssteuerung detektiert wird.

Wenn die Sensoren 15a, 15b kein Handstück 11 beziehungsweise ein mit einer Markierung 13, die auf eine verringerte Rotationsgeschwindigkeit hinweist versehenes Handstück 11 detektieren, woraus sich keine Kapazitätsänderung ergibt, so wird die maximale Rotationsgeschwindigkeit der Antriebseinheit 10 auf 100.000 Umdrehungen pro Minute beziehungsweise die maximal mögliche Drehzahl eingestellt. Startet der Bediener die Antriebseinheit 10, so wird eine regelbare maximal mögliche Rotationsgeschwindigkeit - in der Regel 100.000 Umdrehungen pro Minute - freigegeben.

Wird jedoch ein Handstück 11 verwendet, das nicht auf die größtmögliche maximale Rotationsgeschwindigkeit ausgelegt ist, so wird dieses mit einer kapazitiven Oberfläche 20 versehen sein, die durch die entsprechend ausgebildeten Sensoren 15a,15b an der Antriebseinheit 10 erkannt wird. Hierdurch wird sich eine Änderung der elektrischen Kapazität ergeben, so dass hieraus das Signal für die Antriebssteuerung 4 abgeleitet werden kann und somit die maximale Rotationsgeschwindigkeit abgesenkt und auf das entsprechende Handstück 11 angepasst wird. Startet der Bediener nun die Antriebseinheit 10, so wird diese lediglich mit beispielsweise 40.000 Umdrehungen pro Minute arbeiten. In beiden vorgenannten Fällen ist die Antriebssteuerung 4 derart ausgelegt, dass die LED 22 mit gleichbleibender Leistung betrieben wird, um Licht zur Verfügung zu stellen. Auf einfache Art und Weise kann somit eine Schnittstelle 2 zur Verfügung gestellt werden, die die Detektion des jeweilig angeordneten Handstückes 11 sicher und klar erlaubt und entsprechend an die Antriebssteuerung 4 rückmeldet. Durch die Integration der Stromversorgung der Sensoren 15a,15b in die Stromversorgung der im Handstück 11 beziehungsweise der Antriebseinheit 10 vorgesehenen LED 22 kann hier zusätzlich das Baumaß verringert und die Schaltung vereinfacht werden. Anstelle von kapazitiven Sensoren 15a, 15b besteht selbstverständlich die Möglichkeit, dass diese als Leser für RFID-Chips oder in sonstiger Art und Weise, beispielsweise induktiv, ausgebildet sind. Entsprechend ist dann die Gegenseite des Sensorsystems zu wählen. Die kapazitive Oberfläche 20 wäre, beispielsweise bei Verwendung eines RFID-Systems dann als RFID-Chip beziehungsweise Transponder auszubilden oder durch diesen zu ersetzen. Der RFID-Chip kann auch im Handstück 11, das heißt, von der Kontaktfläche 23 beziehungsweise der Oberfläche 18 beabstandet angeordnet werden.

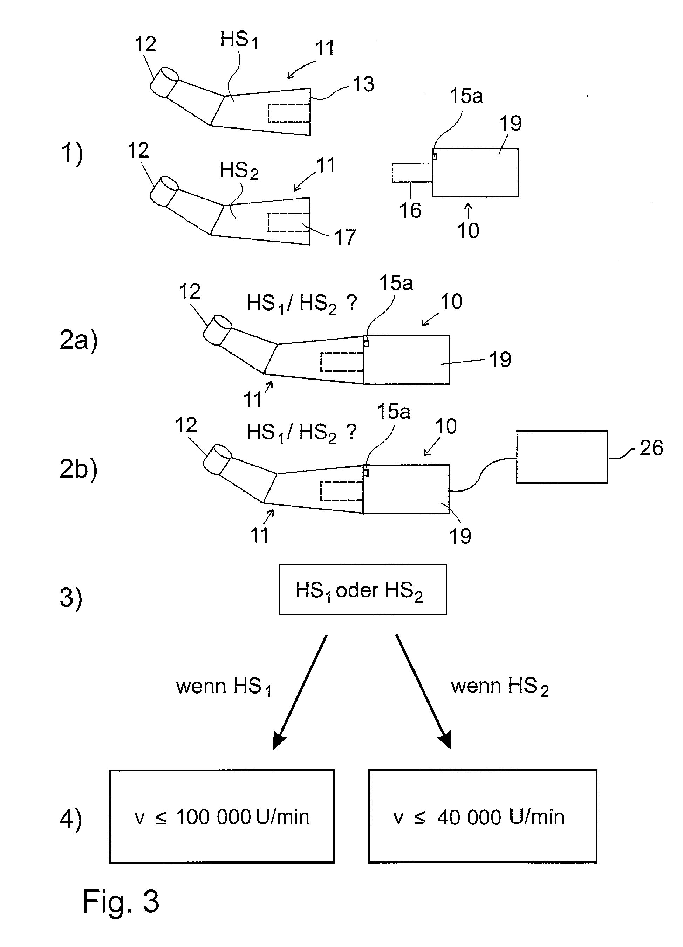

Die Fig. 3 zeigt schematisch das Verfahren zum Bestimmen der maximalen Rotationsgeschwindigkeit einer Antriebseinheit 10 für ein dentaltechnisches Handstück 11. Es werden zwei Handstücke 11 zur Verfügung gestellt (Schritt 1). Das erste Handstück 11, in der Fig. 3 mit der Bezeichnung HS₁ versehen, eignet sich zum Betrieb mit 100.000 Umdrehungen pro Minute an der Antriebseinheit 10 und trägt eine Markierung 13. Das zweite dentaltechnische Handstück 11, in Fig. 3 bezeichnet mit HS₂ kann mit Rotationsgeschwindigkeiten von maximal 40.000 Umdrehungen pro Minute betrieben werden und trägt keine Markierung. Die Antriebseinheit 10 ist in der Lage, maximale Rotationsgeschwindigkeiten von bis zu 100.000 Umdrehungen pro Minute zur Verfügung zu stellen. In der Antriebseinheit 10 ist ein Sensor 15a vorgesehen, der dazu dient, eine Erkennung der Markierung (falls vorhanden) des Handstückes 11 durchzuführen und die maximale Umdrehungsgeschwindigkeit entsprechend einzustellen beziehungsweise zu begrenzen. Die Antriebseinheit 10 verfügt über eine Kupplung 16, die mit einem passenden Kupplungsabschnitt 17 in den Handstücken 11 in Eingriff gebracht wird und hierüber dann die Weitergabe von Energie, einem Medium und/oder des Drehmomentes bewerkstelligt. Zum Betrieb des gesamten dentaltechnischen Systems 1 wird das Handstück 11 an der Antriebseinheit 10 angekuppelt, beispielsweise aufgesetzt und ist lösbar mit der Antriebseinheit 10 verbunden (Schritt 2a/2b).

In dem zweiten Schritt des Verfahrens erfolgt auch eine Erfassung der Art beziehungsweise des Typs des angesetzten Handstücks 11. Hierbei tritt der Sensor 15a, der auch aus zwei Sensoren 15a beziehungsweise Sensorabschnitten gebildet sein kann (vgl. Fig. 1) mit einer entsprechenden Markierung 13 am Handstück 11 in Kontakt und erkennt darüber den jeweiligen Typ des Handstückes 11. Die Markierung 13 am Handstück 11 kann dabei entweder unmittelbar aus durch den Sensor beziehungsweise eine den Sensor 15a ersetzende beziehungsweise ergänzende Erkennungseinheit 14 beziehungsweise Ausleseeinheit erkannt beziehungsweise erfasst werden. Aus der erfassten Markierung 13 wird dann eine direkte Ansteuerung der Antriebssteuerung 4 erfolgen, die die Motorleistung beziehungsweise die Umdrehungszahl der Antriebseinheit 10 entsprechend einstellt. Daneben besteht selbstverständlich auch die Möglichkeit, wie in Schritt 2b der Fig. 3 dargestellt, dass eine unmittelbare Rückkopplung zwischen Markierung 13 und Antriebssteuerung 4 durchgeführt wird. Hierbei kodiert die Markierung lediglich den Speicherort eines Wertes für die maximale Rotationsgeschwindigkeit in einer Datenbank oder einem Speicher. Die Erkennungseinheit 14 umfasst in diesem Fall des Weiteren eine Auswerteeinheit 26 die auch die Datenbank beziehungsweise den Speicher umfasst und die die entsprechende maximale Rotationsgeschwindigkeit aus dieser Datenbank beziehungsweise dem Speicher ausliest und in Form eines Steuersignals an die Antriebssteuerung weitergibt. Diese stellt daraufhin die maximale Rotationsgeschwindigkeit entsprechend ein. Die Auswerteinheit 26 ist hier schematisch dargestellt und von dem dentaltechnischen System 1 getrennt vorgesehen. Es besteht die Möglichkeit, die Antriebssteuerung 4 in Form eines Mikrocontrollers auszuführen und in das Gehäuse 19 der Antriebseinheit 10 zu integrieren.

Aus den erfassten beziehungsweise ausgelesenen Werten für die maximal mögliche Rotationsgeschwindigkeit wird ermittelt, welcher Typ von Handstück 11 an der Antriebseinheit 10 befindet (Schritt 3). Basierend hierauf erfolgt dann die Ansteuerung der Antriebseinheit 10. Diese wird dann mit der durch die Antriebssteuerung 4 beziehungsweise die Markierung 13 vorgegebenen Rotationsgeschwindigkeit entweder 40.000 Umdrehungen pro Minute oder 100.000 Umdrehungen pro Minute betrieben, die auf die maximal zulässige beziehungsweise für das Handstück 11 verträgliche Geschwindigkeit eingestellt wird (Schritt 4).

Das zur Verfügung gestellte dentaltechnische System 1 beziehungsweise das zugehörige Verfahren ermöglicht es somit, an ein und derselben Antriebseinheit 10 Handstücke 11 mit unterschiedlichen maximal möglichen Rotationsgeschwindigkeiten zu betreiben. Die Auswahl beziehungsweise Einstellung der maximalen Rotationsgeschwindigkeit erfolgt hierbei sensor- beziehungsweise markierungsgestützt und automatisch durch die Antriebseinheit 10 beziehungsweise durch eine dieser zugeordneten Antriebssteuerung 4. Es wird somit eine Entlastung des Bedienpersonals realisiert, zudem kommt es zu keinem vorzeitigen Verschleiß beziehungsweise zur Beschädigung von schwächeren, das heißt auf niedrigere Drehzahlen ausgelegten Handstücken 11.

Im Zusammenhang mit der Beschreibung der vorliegenden Erfindung wurde stets nur ein Handstück 11 erwähnt. Es versteht sich von selbst, dass es sich bei diesem Handstück 11 um sämtliche möglichen und denkbaren Ausgestaltungsmöglichkeiten dentaltechnischer Handstücke 11 handelt. In Frage kommen hier beispielsweise auch sogenannte Winkelstücke beziehungsweise Instrumententräger. Die Handstücke 11 dienen, je nach Ausgestaltung beziehungsweise Ausführung dazu, Bearbeitungswerkzeuge, beispielsweise Bohrer, Fräser oder Polieraufsätze zu tragen beziehungsweise zu betreiben. Denkbar ist in diesem Zusammenhang auch, dass eine weitere Rückkopplung zwischen Antriebssteuerung 4 und Handstück 11 erfolgt und eine weitergehende Anpassung der Rotationsgeschwindigkeit in Abhängigkeit von dem an dem Handstück 11 eingesetzten Bearbeitungswerkzeug durchgeführt wird. Hier kann das im Zusammenhang mit der Kupplung zwischen Antriebseinheit 10 und Handstück 11 beschriebene sensor- beziehungsweise markierungsgestützte System in gleicher Art und Weise im Bereich des Bearbeitungskopfes 12 am Handstück 11, der das Bearbeitungswerkzeug aufnimmt, vorgesehen werden und eine entsprechende Ansteuerung der Antriebseinheit 10 bewirken.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden, oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Antriebseinheit für ein dentaltechnisches Handstück (11), wobei die Antriebseinheit (10) eine Kupplung (16) für die lösbare Befestigung des Handstückes (11) aufweist und die Antriebseinheit (10) einen Antrieb, insbesondere einen Elektromotor, sowie eine Antriebssteuerung (4) umfasst, und wobei an dem Handstück eine Markierung vorgesehen ist, **dadurch gekennzeichnet, dass** die Antriebseinheit (10) eine Erkennungseinheit (14) umfasst, die dazu dient, die an dem Handstück (11) vorgesehene Markierung (13) bzw. eine Markierungsinformation zu erfassen und aus der Markierung (13) bzw. Markierungsinformation eine Rotationsgeschwindigkeit für den Antrieb abzuleiten.

2. Antriebseinheit nach Anspruch 1, **dadurch gekennzeichnet, dass** von der Erkennungseinheit (14) die der Markierung (13) zugeordnete oder zuordenbare Markierungsinformation erkennbar und in ein Steuersignal umsetzbar ist und die Antriebssteuerung (4) aufgrund des von der Erkennungseinheit (14) weitergegebenen Steuersignals die maximale Rotationsgeschwindigkeit des Antriebs vorgibt oder einstellt.

3. Antriebseinheit nach Anspruch 1 oder 2, **dadurch gekennzeichnet, dass** das Fehlen einer Markierung (13) am Handstück (11) ebenfalls eine Markierungsinformation ist.

4. Antriebseinheit nach einem der vorhergehenden Ansprüche, **dadurch gekennzeichnet, dass** die Erkennungseinheit (14) einen Sensor (15a, b) und/oder eine Ausleseeinheit aufweist, der beziehungsweise die im Bereich der Kupplung (16), insbesondere im Gehäuse (19) der Antriebseinheit (10) angeordnet ist, insbesondere wobei ein kapazitiver, induktiver, optischer oder elektrisch wirkender Sensor (15a,b) vorgesehen ist.

5. Antriebseinheit nach einem der vorhergehenden Ansprüche, **dadurch gekennzeichnet, dass** die Erkennungseinheit (14) eine Ausleseeinheit für das Auslesen eines, die Markierung (13) bildenden beziehungsweise die Markierungsinformation beinhaltenden RFID-Chip aufweist und/oder die Erkennungseinheit (14) aus der Markierungsinformation unmittelbar ein Steuersignal generiert oder die Erkennungseinheit (14) die Markierungsinformation in einer Datenbank oder einem Datenspeicher abfrägt und aus dieser Antwort das Steuersignal generiert.

6. Dentaltechnisches Handstück (11) mit einem Kupplungsabschnitt (17), der lösbar mit einer Kupplung (16) einer Antriebseinheit (10), insbesondere zur Übertragung von Energie, Medium und/oder Drehmoment verbindbar ist und wobei das Handstück (11) einen Antriebsstrang aufweist, der für den Antrieb eines mit dem Handstück (11) lösbar verbindbaren Bearbeitungswerkzeuges dient, **dadurch gekennzeichnet, dass** das Handstück (11) eine, von einer Erkennungseinheit (14) erkennbare Markierung trägt und wobei die Markierung auf die maximale Rotationsgeschwindigkeit des Antriebsstranges hinweist und/oder Informationen über die maximale Rotationsgeschwindigkeit kodiert.

7. Handstück nach Anspruch 6, **gekennzeichnet durch** eine kapazitive, induktive, optisch oder elektrisch wirkende Markierung (13).

8. Handstück nach Anspruch 6 oder 7, **dadurch gekennzeichnet, dass** die Markierung (13) als aktive oder positive Markierung (13), insbesondere als Transponder beziehungsweise RFID-Chip ausgebildet ist.

9. Handstück nach einem der Ansprüche 6 bis 8, **dadurch gekennzeichnet, dass** die Markierung (13) mittelbar oder unmittelbar die maximale Rotationsgeschwindigkeit als Information beinhaltet.

10. Handstück nach einem der Ansprüche 6 bis 9, **dadurch gekennzeichnet, dass** die Markierung (13) eine das Handstück (11) individualisierende Information trägt oder kodiert, über die aus einem Speicher oder einer Datenbank die maximale Rotationsgeschwindigkeit abrufbar beziehungswei se ableitbar ist.

11. Dentaltechnisches System, umfassend eine Antriebseinheit (10) nach einem der Ansprüche 1 bis 5, sowie wahlweise ein herkömmliches dentaltechnisches Handstück (11) ohne Markierung (13), oder ein dentaltechnisches Handstück (11) nach einem der Ansprüche 6 bis 10, wobei die Erkennungseinheit (14) die gegebenenfalls vorhandene Markierung (13) des auf der Kupplung (16) aufgesteckten Handstückes (11) erkennt und die insbesondere erfasste ausgelesene oder ausgewertete Markierungsinformation an eine Antriebssteuerung (4) weiterleitet.

12. System nach Anspruch 11, **dadurch gekennzeichnet, dass** in der Antriebssteuerung (4) eine hohe und eine niedrige maximale Rotationsgeschwindigkeit hinterlegt ist und beim Start des Systems (2) durch die Antriebssteuerung (4) zunächst die niedrige maximale Rotationsgeschwindigkeit eingestellt und die Antriebssteuerung (4) wegen der von der Erkennungseinheit (14) übermittelten Markierungsinformation auf die hohe maximale Rotationsgeschwindigkeit umschaltet oder durch die Antriebssteuerung (4) zunächst die hohe maximale Rotationsgeschwindigkeit eingestellt ist und die Antriebssteuerung (4) wegen der von der Erkennungseinheit (14) übermittelten Markierungsinformation auf die niedrige maximale Rotationsgeschwindigkeit umschaltet.

13. Verfahren für die Bestimmung der maximalen Rotationsgeschwindigkeit einer Antriebseinheit (10) eines dentaltechnisches Handstückes (11), wobei die maximale Rotationsgeschwindigkeit von dem Typ des auf die Kupplung (16) der Antriebseinheit (10) aufgesteckten Handstückes (11) vorgegeben wird.

14. Verfahren nach Anspruch 13, **dadurch gekennzeichnet, dass** das Handstück (11) aus einer Mehrzahl von Handstücken (11) ausgewählt wird und zumindest ein Handstück (11) eine Markierung (13) trägt, die automatisch erkannt wird und wobei durch die Markierung (13) gebildete Markierungsinformation auf die maximale Rotationsgeschwindigkeit geschlossen wird.

15. Verfahren nach einem der Ansprüche 13 oder 14, **dadurch gekennzeichnt, dass** zunächst ein Handstück (11) auf eine Kupplung (16) einer Antriebseinheit aufgesetzt wird und danach eine Erkennungseinheit (14) der Antriebseinheit (10) eine gegebenenfalls am Handstück (11) angeordnete Markierung (13) erkennt und diese Markierungsinformation an die Antriebssteuerung (4) der Antriebseinheit (10) oder die Antriebseinheit (10) direkt geleitet wird und die Antriebssteuerung (4) aufgrund dessen die maximale Rotationsgeschwindigkeit vorgibt.
